# EUROPÄISCHE PATENTSCHRIFT

(11) **EP 4 054 868 B1**
(45) Veröffentlichungstag und Bekanntmachung des Hinweises auf die Patenterteilung: **06.03.2024**
(21) Anmeldenummer: 20781483.1
(22) Anmeldetag: 28.09.2020
(51) Int. Cl.: B60G 7/00, F16C 11/06, B62K 25/00

(54) **VORDERRADFÜHRUNG FÜR EIN EINSPURIGES KRAFTFAHRZEUG**
FRONT WHEEL GUIDE FOR A SINGLE-TRACK MOTOR VEHICLE
GUIDE DE ROUE AVANT POUR UN VÉHICULE AUTOMOBILE SUR VOIE UNIQUE

(30) Priorität: 08.11.2019 DE 102019130169
(43) Veröffentlichungstag der Anmeldung: 14.09.2022
(73) Patentinhaber: Bayerische Motoren Werke Aktiengesellschaft, 80809 München (DE)
(72) Erfinder: GLUECK, Christian, 93083 Obertraubling (DE)
(86) Internationale Anmeldenummer: PCT/EP2020/077040
(87) Internationale Veröffentlichungsnummer: WO 2021/089240

(56) Entgegenhaltungen:
- WO-A1-95/13207
- CN-A- 106 671 716
- DE-A1- 3 708 579
- DE-A1- 3 708 580
- DE-A1- 3 820 860
- DE-A1- 4 110 954
- DE-A1- 10 230 916
- DE-B3-102018 113 433
- DE-T2- 60 020 148
- GB-A- 2 171 449

## Beschreibung

Die Erfindung betrifft eine Vorderradführung für ein einspuriges Kraftfahrzeug mit einer Teleskopgabel, einer Gabelbrücke und einem Längslenker.

Zur Gewährleistung der kinematischen Freigänge einer Telelevervorderradführung für ein einspuriges Kraftfahrzeug ist ein Kugelgelenk an der unteren Gabelbrücke verbaut. Dieses Kugelgelenk muss sich bei Lenkbewegungen um eine Kugelzapfenachse drehen. Dabei entsteht der nachfolgende Zielkonflikt. Es ist ein möglichst geringes Reibmoment um die Lenkachse erforderlich, um ein zielgenaues Fahrgefühl im niedrigen Geschwindigkeitsbereich zu erreichen. Demgegenüber ist eine möglichst hohe Steifigkeit im Kugelgelenk notwendig, um die benötigte Fahrstabilität im Hochgeschwindigkeitsbereich zu erreichen. Die Steifigkeit des Kugelgelenks kann durch die Geometrie und die Vorspannung der Teile im Gelenk beeinflusst werden. Eine hohe Vorspannung im Gelenk führt zu einer hohen Steifigkeit und einem höheren Reibmoment um die Gelenkachse.

Druckschriftlicher Stand der Technik im vorliegenden technischen Gebiet, ist in den Dokumenten DE 37 08 580 A1, DE 37 08 579 A1, CN 106 671 716 A,

DE 41 10 954 A1, DE 38 20 860 A1, WO 95/13207 A1, DE 600 20 148 T2 und DE 102 30 916 A1 offenbart, wobei das Dokument DE 41 10 954 A1 den Oberbegriff des Anspruchs 1 aufzeigt.

Es ist daher Aufgabe der vorliegenden Erfindung, eine Vorderradführung für ein einspuriges Kraftfahrzeug bereitzustellen, die hinsichtlich des Zielkonflikts zwischen einem niedrigen Reibmoment und einer hohen Steifigkeit optimiert ist.

Diese Aufgabe wird durch die Merkmalskombination gemäß Patentanspruch 1 gelöst.

Erfindungsgemäß wird eine Vorderradführung für ein einspuriges Kraftfahrzeug vorgeschlagen. Dabei weist die Vorderradführung eine Teleskopgabel, eine Gabelbrücke und einen Längslenker auf. Die Teleskopgabel weist zwei Gabelholme auf, die jeweils ein unteres Gabelrohr und ein relativ dazu verschieblich angeordnetes oberes Gabelrohr umfassen. Die Gabelbrücke erstreckt sich in einer Querrichtung, d.h. quer zu einer Achse Vorderrad zu Hinterrad, und verbindet dabei die unteren Gabelrohre der Gabelholme miteinander. Der schwenkbar am Motorrad anlenkbare Längslenker ist mittels eines Kugelgelenks mit der Gabelbrücke verbunden.

Auf diese Weise wird das Reibmoment um das Kugelgelenk durch ein zusätzliches Wälzlager minimiert. Somit kann unabhängig vom Kugelgelenk ein definiertes Reibmoment um die Lenkachse erreicht werden. Dies führt zu einer deutlichen Verbesserung der Zielgenauigkeit im niedrigen Geschwindigkeitsbereich. Ferner können die Steifigkeitsanforderungen unabhängig von dem Reibmoment um das Kugelgelenk definiert werden. Aus diesem Grund kann die Fahrstabilität im Hochgeschwindigkeitsbereich ohne Einfluss auf das Reibmoment um die Lenkachse optimiert werden. Des Weiteren kann eine längere Lebensdauer der Kugelgelenke erreicht werden, da mit höherer Steifigkeit im Kugelgelenk eine längere Laufzeit bis zum Austausch aufgrund von einem Spiel im Kugelgelenk ermöglicht wird.

Erfindungsgemäß ist vorgesehen, dass der Längslenker mittels zwei Wälzlagern an dem Kugelgelenk drehbar gelagert ist. Die Lagerung des Längslenkers um das Kugelgelenk wird aufgrund der zwei Wälzlager optimiert. Die beiden Wälzlager sind nebeneinander angeordnet und rotieren um eine gemeinsame Rotationsachse. Diese Lagerung verbessert und vereinfacht die Anpassung des Reibmoments um die Lenkachse sowie die Fixierung an dem Kugelgelenk.

Erfindungsgemäß weist das Kugelgelenk einen Kugelgelenkzapfen auf, der sich entlang einer Kugelzapfenachse erstreckt. Dabei lagert das jeweilige Wälzlager den Längslenker um die Kugelzapfenachse rotierbar an dem Kugelgelenkzapfen. Dabei ist günstig, dass der Kugelgelenkzapfen an die Anforderungen der rotierbaren Lagerung des Längslenkers angepasst ist, sodass das Reibmoment um die Lenkachse weiter optimiert ist.

In einem Ausführungsbeispiel der Erfindung ist vorgesehen, dass der Kugelgelenkzapfen zwei sich radial erstreckende Vorsprünge aufweist, die jeweils eine Schulter zur Anlage des jeweiligen Wälzlagers bilden und zwischen denen die Wälzlager angeordnet oder formschlüssig fixiert sind. Aufgrund der Schulter wird der Freiheitsgrad des Wälzlagers betreffend eine axiale Positionsveränderung hinsichtlich der Kugelzapfenachse in Richtung der Schulter gesperrt.

Ferner ist eine Ausführung günstig, bei der der Längslenker einen Befestigungsabschnitt aufweist, der eine Öffnung zum Übergriff des Kugelgelenkzapfens aufweist. Dadurch ist der Längslenker einfach und sicher auf das Kugelgelenk bzw. die Wälzlager montierbar. Ferner wird der Längslenker mittels der Öffnung an den Wälzlagern gelagert

In einer weiteren vorteilhaften Variante ist erfindungsgemäß vorgesehen, dass die Öffnung des Längslenkers einen Eingriffsring aufweist, der zwischen den beiden Wälzlagern angeordnet ist. Vorteilhaft daran ist, dass die Wälzlager an dem Eingriffsring anliegen und dieser somit einen weiteren Freiheitsgrad betreffend einer axialen Positionsveränderung hinsichtlich der Kugelzapfenachse sperrt.

Die erfindungsgemäße Vorderradführung ist in einer Ausführungsvariante ausgebildet, dass das jeweilige Wälzlager zwischen jeweils einem Vorsprung und dem Eingriffsring formschlüssig fixiert ist. Dabei ist günstig, dass das jeweilige Wälzlager an dem Eingriffsring anliegt und auf diese Weise mit dem korrespondierenden Vorsprung bzw. der korrespondierenden Schulter das entsprechende Wälzlager formschlüssig fixiert.

In einer alternativen Ausführung der vorliegenden Erfindung ist ferner vorgesehen, dass der Eingriffsring des Längslenkers von dem Kugelgelenkzapfen beabstandet angeordnet ist, wodurch ein Spalt ausgebildet ist. Somit ist der Längslenker mittelbar durch die Wälzlager an dem Kugelgelenkzapfen gelagert und steht nicht in Kontakt zu diesem. Folglich wird das Reibmoment der Lagerung nicht durch den Eingriffsring beeinflusst.

In einer weiteren erfindungsgemäßen Variante ist das jeweilige Wälzlager ein Kugelrollenlager oder ein Kegelrollenlager. Diese beiden Wälzlagerbauformen sind für die Lagerung aufgrund ihrer Eigenschaften hinsichtlich der Steifigkeit und des Reibmoments bei der vorliegenden Anwendung besonders geeignet.

Weiter vorteilhaft ist es, wenn ein Verbindungsbereich zwischen der Gabelbrücke und dem Kugelgelenk mit einer Dichtung gegenüber einer Umgebung abgedichtet ist. Dadurch ist diese Lagerung der Vorderradführung gegen die Umgebung und folglich auch eine Verschmutzung abgedichtet, wodurch die Lebensdauer der Vorderradführung bzw. der Lagerung verlängert wird.

Ein weiterer Aspekt der Erfindung betrifft ein einspuriges Kraftfahrzeug, insbesondere ein Motorrad mit einer erfindungsgemäßen Vorderradaufhängung.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht einer Vorderradführung für ein einspuriges Kraftfahrzeug und
- Fig. 2: eine Schnittansicht eines Verbindungsbereichs einer Vorderradführung für ein einspuriges Kraftfahrzeug.

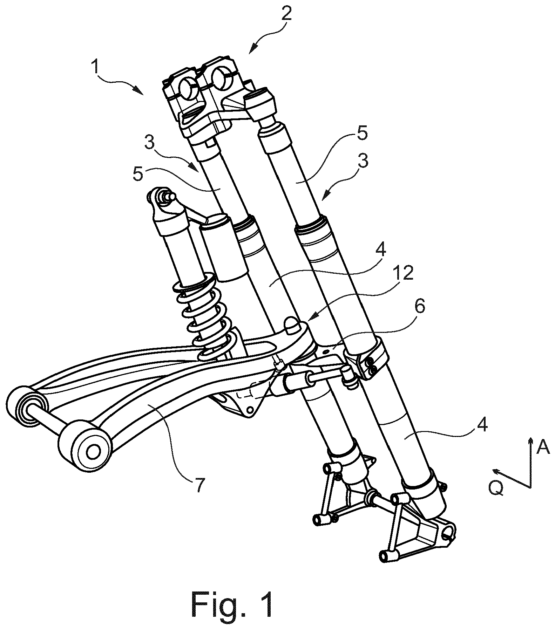

Figur 1 zeigt eine perspektivische Ansicht einer Vorderradführung 1 für ein einspuriges Kraftfahrzeug, welche eine Teleskopgabel 2, eine Gabelbrücke 6 und einen Längslenker 7 aufweist..

Die Teleskopgabel 2 weist zwei Gabelholme 3 auf, die jeweils ein unteres Gabelrohr 4 und ein relativ dazu verschieblich angeordnetes oberes Gabelrohr 5 umfassen. Dabei erstreckt sich die Gabelbrücke 6 in einer Querrichtung Q und verbindet die unteren Gabelrohre 4 der Gabelholme 3 miteinander. Die Querrichtung Q verläuft quer zu einer Achse, die sich von dem Vorderrad zu dem Hinterrad des einspurigen Kraftfahrzeugs erstreckt. Ferner ist der schwenkbar am nicht dargestellten einspurigen Kraftfahrzeug anlenkbare Längslenker 7 in einem Verbindungsbereich 12 mit der Gabelbrücke 6 verbunden.

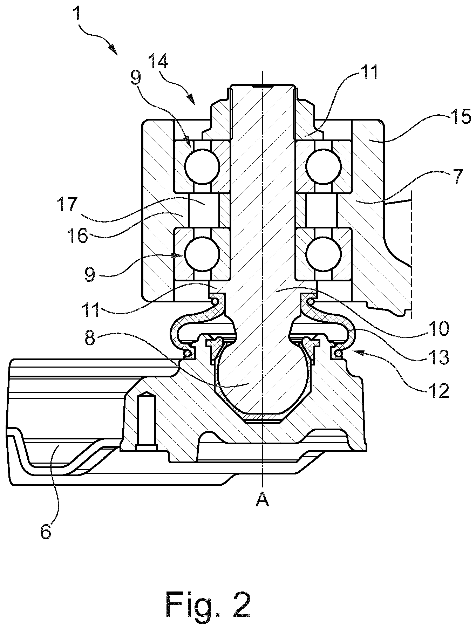

In Figur 2 ist eine Schnittansicht des in Figur 1 gezeigten Verbindungsbereichs 12 zwischen der Gabelbrücke 6 und dem Längslenker 7 der Vorderradführung 1 dargestellt. Der schwenkbar am nicht dargestellten einspurigen Kraftfahrzeug anlenkbare Längslenker 7 ist mittels eines Kugelgelenks 8 mit der Gabelbrücke 6 verbunden. Die Gabelbrücke 6 weist eine Aufnahme mit einer Form eines abgestumpften Tetraeders auf. Diese Aufnahme ist entsprechend an den kugelförmigen Abschnitt des Kugelgelenks 8 angepasst, sodass der Längslenker 7 optimal an der Gabelbrücke 6 gelagert ist.

Ferner zeigt Figur 2, dass der Längslenker 7 mittels zwei Wälzlagern 9 an dem Kugelgelenk 8 drehbar gelagert ist. Hierfür weist das Kugelgelenk 8 einen Kugelgelenkzapfen 10 auf, der sich entlang einer Kugelzapfenachse A erstreckt. Außerdem lagert hierbei das jeweilige Wälzlager 9 den Längslenker 7 um die Kugelzapfenachse A rotierbar an dem Kugelgelenkzapfen 10. In dieser Ausführungsvariante ist das Wälzlager 9 als ein Kugelrollenlager ausgebildet.

Der Kugelgelenkzapfen 10 umfasst zwei sich radial erstreckende Vorsprünge 11, die jeweils als eine Schulter zur Anlage des jeweiligen Wälzlagers 9 ausgebildet sind und zwischen denen die beiden Wälzlager 9 angeordnet bzw. formschlüssig fixiert sind.

Der Längslenker 7 bildet einen Befestigungsabschnitt 15 aus, der eine Öffnung 14 zum Übergriff des Kugelgelenkzapfens 10 aufweist. Diese Öffnung 14 des Längslenkers 7 umfasst einen Eingriffsring 16, der zwischen jeweils einem Außenring der beiden Wälzlager 9 angeordnet ist. Zwischen einem jeweiligen Innenring der beiden Wälzlager 9 befindet sich eine Hülse. In der Schnittansicht der Figur 2 weist der Befestigungsabschnitt 15 mit dem Eingriffsring 16 eine T-förmige Struktur auf, wodurch eine Anlagefläche für das jeweilige Wälzlager 9 ausgebildet ist. Folglich ist das jeweilige Wälzlager 9 zwischen jeweils einem der beiden Vorsprünge 11 und dem Eingriffsring 16 bzw. der Hülse formschlüssig fixiert. Dabei liegen die Wälzlager 9 mit ihren Käfigen an der Schulter bzw. dem Vorsprung 11 und dem Eingriffsring 16 bzw. der Hülse an.

Darüber hinaus zeigt Figur 2, dass der Eingriffsring 16 des Längslenkers 7 von dem Kugelgelenkzapfen 10 beabstandet angeordnet ist, wodurch ein Spalt 17 ausgebildet ist. Der Verbindungsbereich 12 zwischen der Gabelbrücke 6 und dem Kugelgelenk 8 ist mit einer Dichtung 13 gegenüber einer Umgebung abgedichtet.

## Patentansprüche

1. Vorderradführung (1) für ein einspuriges Kraftfahrzeug, wobei die Vorderradführung (1) eine Teleskopgabel (2), eine Gabelbrücke (6) und einen Längslenker (7) aufweist, wobei
die Teleskopgabel (2) zwei Gabelholme (3) aufweist, die jeweils ein unteres Gabelrohr (4) und ein relativ dazu verschieblich angeordnetes oberes Gabelrohr (5) umfassen,
wobei sich die Gabelbrücke (6) in einer Querrichtung (Q) erstreckt und dabei die unteren Gabelrohre (4) der Gabelholme (3) miteinander verbindet,
wobei der schwenkbar am einspurigen Kraftfahrzeug anlenkbare Längslenker (7) mittels eines Kugelgelenks (8) mit der Gabelbrücke (6) verbunden ist, **dadurch gekennzeichnet, dass**
der Längslenker (7) mittels zwei Wälzlagern (9) an dem Kugelgelenk (8) drehbar gelagert ist,
wobei das Kugelgelenk (8) einen Kugelgelenkzapfen (10) aufweist, der sich entlang einer Kugelzapfenachse (A) erstreckt, wobei das jeweilige Wälzlager (9) den Längslenker (7) um die Kugelzapfenachse (A) rotierbar an dem Kugelgelenkzapfen (10) lagert.

2. Vorderradführung (1) gemäß Anspruch 1, wobei der Kugelgelenkzapfen (10) zwei sich radial erstreckende Vorsprünge (11) aufweist, die jeweils eine Schulter zur Anlage des jeweiligen Wälzlagers (9) bilden und zwischen denen die Wälzlager (9) angeordnet oder formschlüssig fixiert sind.

3. Vorderradführung (1) gemäß Anspruch 1 oder 2, wobei der Längslenker (7) einen Befestigungsabschnitt (15) mit einer Öffnung (14) zum Übergriff des Kugelgelenkzapfens (10) aufweist.

4. Vorderradführung (1) gemäß Anspruch 3, wobei die Öffnung (14) des Längslenkers (7) einen Eingriffsring (16) aufweist, der zwischen den beiden Wälzlagern (9) angeordnet ist.

5. Vorderradführung (1) gemäß Anspruch 4, wobei das jeweilige Wälzlager (9) zwischen jeweils einem Vorsprung (11) und dem Eingriffsring (16) formschlüssig fixiert ist.

6. Vorderradführung (1) gemäß Anspruch 4 oder 5, wobei der Eingriffsring (16) des Längslenkers (7) von dem Kugelgelenkzapfen (10) beabstandet angeordnet ist, wodurch ein Spalt (17) ausgebildet ist.

7. Vorderradführung (1) gemäß einem der vorherigen Ansprüche, wobei die Wälzlager (9) ein Kugelrollenlager oder ein Kegelrollenlager sind.

8. Vorderradführung (1) gemäß einem der vorherigen Ansprüche, wobei ein Verbindungsbereich (12) zwischen der Gabelbrücke (6) und dem Kugelgelenk (8) mit einer Dichtung (13) gegenüber einer Umgebung abgedichtet ist.

## Claims

1. Front wheel guide (1) for a single-track motor vehicle, the front wheel guide (1) having a telescopic fork (2), a top yoke (6) and a trailing arm (7),
the telescopic fork (2) comprising two fork rods (3) which in each case comprise a lower fork tube (4) and an upper fork tube (5) which is arranged displaceably relative thereto,
the top yoke (6) extending in a transverse direction (Q) and in the process connecting the lower fork tubes (4) of the fork rods (3) to one another,
the trailing arm (7) which is articulated pivotably on the single-track motor vehicle being connected by means of a ball joint (8) to the top yoke (6), **characterized in that** the trailing arm (7) is mounted rotatably on the ball joint (8) by means of two anti-friction bearings (9),
the ball joint (8) comprising a ball joint pivot (10) which extends along a ball pivot axis (A), the respective anti-friction bearing (9) mounting the trailing arm (7) on the ball joint pivot (10) rotatably about the ball pivot axis (A).

2. Front wheel guide (1) according to Claim 1, the ball joint pivot (10) comprising two radially extending projections (11) which in each case form a shoulder for contact of the respective anti-friction bearing (9) and between which the anti-friction bearings (9) are arranged or fixed in a positively locking manner.

3. Front wheel guide (1) according to Claim 1 or 2, the trailing arm (7) comprising a fastening portion (15) with an opening (14) for engaging over the ball joint pivot (10) .

4. Front wheel guide (1) according to Claim 3, the opening (14) of the trailing arm (7) comprising an engagement ring (16) which is arranged between the two anti-friction bearings (9).

5. Front wheel guide (1) according to Claim 4, the respective anti-friction bearing (9) being fixed in a positively locking manner between in each case one projection (11) and the engagement ring (16).

6. Front wheel guide (1) according to Claim 4 or 5, the engagement ring (16) of the trailing arm (7) being arranged spaced apart from the ball joint pivot (10), as a result of which a gap (17) is configured.

7. Front wheel guide (1) according to one of the preceding claims, the anti-friction bearings (9) being a spherical roller bearing or a tapered roller bearing.

8. Front wheel guide (1) according to one of the preceding claims, a connecting region (12) between the top yoke (6) and the ball joint (8) being sealed with respect to a surrounding area by way of a seal (13).

## Revendications

1. Guide de roue avant (1) pour un véhicule automobile à deux roues, le guide de roue avant (1) présentant une fourche télescopique (2), un pont de fourche (6) et un bras longitudinal (7),
la fourche télescopique (2) présentant deux longerons de fourche (3) qui comprennent chacun un tube de fourche inférieur (4) et un tube de fourche supérieur (5) agencé de manière à pouvoir coulisser par rapport à celui-ci,
le pont de fourche (6) s'étendant dans une direction transversale (Q) et reliant ainsi les tubes de fourche inférieurs (4) des longerons de fourche (3) entre eux,
le bras longitudinal (7) pouvant être articulé de manière pivotante sur le véhicule automobile à deux roues étant relié au pont de fourche (6) au moyen d'une articulation à rotule (8), **caractérisé en ce que** le bras longitudinal (7) est monté de manière rotative sur l'articulation à rotule (8) au moyen de deux paliers à roulement (9),
l'articulation à rotule (8) présentant un pivot d'articulation à rotule (10) qui s'étend le long d'un axe de pivot de rotule (A), le palier à roulement respectif (9) supportant le bras longitudinal (7) de manière rotative autour de l'axe de pivot de rotule (A) sur le pivot d'articulation à rotule (10).

2. Guide de roue avant (1) selon la revendication 1, dans lequel le pivot d'articulation à rotule (10) présente deux saillies (11) s'étendant radialement, qui forment chacune un épaulement pour l'appui du palier à roulement (9) respectif et entre lesquelles les paliers à roulement (9) sont agencés ou fixés par complémentarité de forme.

3. Guide de roue avant (1) selon la revendication 1 ou 2, dans lequel le bras longitudinal (7) présente une section de fixation (15) avec une ouverture (14) pour s'engager sur le pivot d'articulation à rotule (10).

4. Guide de roue avant (1) selon la revendication 3, dans lequel l'ouverture (14) du bras longitudinal (7) présente une bague d'engagement (16) agencée entre les deux paliers à roulement (9).

5. Guide de roue avant (1) selon la revendication 4, dans lequel le palier à roulement (9) respectif est fixé par complémentarité de forme entre une saillie (11) respective et la bague d'engagement (16).

6. Guide de roue avant (1) selon la revendication 4 ou 5, dans lequel la bague d'engagement (16) du bras longitudinal (7) est agencée à distance du pivot d'articulation à rotule (10), moyennant quoi un espace (17) est réalisé.

7. Guide de roue avant (1) selon l'une quelconque des revendications précédentes, dans lequel les paliers à roulement (9) sont un roulement à billes ou un roulement à rouleaux coniques.

8. Guide de roue avant (1) selon l'une quelconque des revendications précédentes, dans lequel une zone de liaison (12) entre le pont de fourche (6) et l'articulation à rotule (8) est étanchéifiée par rapport à un environnement avec un joint d'étanchéité (13).
